# EUROPÄISCHE PATENTANMELDUNG

(11) **EP 2 492 607 A1**
(43) Veröffentlichungstag der Anmeldung: **29.08.2012**
(21) Anmeldenummer: 12156564.2
(22) Anmeldetag: 22.02.2012
(51) Int. Cl.: F24H 1/20, F24H 6/00, A47J 31/54, B60N 3/16, F28D 15/02, F28D 15/04, F24H 1/06

(54) **Wasserheizsystem, insbesondere für Wohnmobile**

(30) Priorität: 23.02.2011 DE 102011004599
(71) Anmelder: J. Eberspächer GmbH & Co. KG, 73730 Esslingen (DE)
(72) Erfinder: Humburg, Michael, 73035 Göppingen (DE)
(74) Vertreter: Ruttensperger, Bernhard

(57) **Zusammenfassung**

Ein Wasserheizsystem, insbesondere für Wohnmobile, umfasst ein Heizgerät (12) mit einer Wärmetauscheranordnung (16) zur Übertragung von im Heizgerät (12) bereitgestellter Wärme auf ein erstes Wärmeträgermedium, ein Wasserreservoir (32) zur Aufnahme von zu erwärmendem Wasser, eine Wärmeübertragungsanordnung (30) zur Übertragung von im ersten Wärmeträgermedium transportierter Wärme auf Wasser im Wasserresservoir (32), wobei die Wärmeübertragungsanordnung (30) wenigstens ein Wärmerohr (34) mit einem in thermischer Wechselwirkung mit dem ersten Wärmeträgermedium stehenden oder bringabren Wärmeeinkopplungsbereich (36) und einem in thermischer Wechselwirkung mit dem Wasser stehenden Wärmeauskopplungsbereich (38) umfasst, wobei in dem wenigstens einen Wärmerohr (34) ein zweites Wärmeträgermedium enthalten ist und ein erster Strömungsraumbereich (54) zur Durchströmung im Wesentlichen durch vom Wärmeeinkopplungsbereich (36) zum Wärmeauskopplungsbereich (38) strömendem, gasförmigem zweiten Wärmeträgermedium sowie ein zweiter Strömungsraumbereich zur Durchströmung im Wesentlichen durch vom Wärmeauskopplungsbereich (38) zum Wärmeeinkopplungsbereich (36) strömendem, flüssigem zweiten Wärmeträgermedium gebildet sind.

## Beschreibung

Die vorliegende Erfindung betrifft ein Wasserheizsystem, wie es insbesondere in Wohnmobilen Einsatz finden kann.

Bei derartigen Wohnmobilen wird zur Beheizung des Innenraums derselben im Allgemeinen auf brennstoffbetriebene Heizgeräte zurückgegriffen, welche mit Dieselbrennstoff oder Heizöl gespeist werden. Zur Aufbereitung von Warmwasser wird ebenso wie zum Kochen im Allgemeinen Gas verwendet, welches in Form von Gasflaschen bereitgehalten wird.

Es ist die Aufgabe der vorliegenden Erfindung, ein Wasserheizsystem bereitzustellen, welches mit dem gleichen Brennstoff betrieben werden kann, was zur Erwärmung von in den Innenraum einzuleitender Luft eingesetzt wird.

Erfindungsgemäß wird diese Aufgabe gelöst durch ein Wasserheizsystem, insbesondere für Wohnmobile, umfassend ein Heizgerät mit einer Wärmetauscheranordnung zur Übertragung von im Heizgerät bereitgestellter Wärme auf ein erstes Wärmeträgermedium, ein Wasserreservoir zur Aufnahme von zu erwärmendem Wasser und eine Wärmeübertragungsanordnung zur Übertragung von im ersten Wärmeträgermedium transportierter Wärme auf Wasser im Wasserresservoir, wobei die Wärmeübertragungsanordnung wenigstens ein Wärmerohr mit einem in thermischer Wechselwirkung mit dem ersten Wärmeträgermedium stehenden oder bringabren Wärmeeinkopplungsbereich und einem in thermischer Wechselwirkung mit dem Wasser stehenden Wärmeauskopplungsbereich umfasst, wobei in dem wenigstens einen Wärmerohr ein zweites Wärmeträgermedium enthalten ist und ein erster Strömungsraumbereich zur Durchströmung im Wesentlichen durch vom Wärmeeinkopplungsbereich zum Wärmeauskopplungsbereich strömendem, gasförmigem zweiten Wärmeträgermedium sowie ein zweiter Strömungsraumbereich zur Durchströmung im Wesentlichen durch vom Wärmeauskopplungsbereich zum Wärmeeinkopplungsbereich strömendem, flüssigem zweiten Wärmeträgermedium gebildet sind.

Bei dem erfindungsgemäßen Wasserheizsystem wird in einem Heizgerät, also insbesondere einem mit flüssigem Brennstoff gespeistem Heizgerät, Wärme bereitgestellt, um auf ein erstes Wärmeträgermedium zu übertragen. Dieses kann die in den Fahrzeuginnenraum auch einzuleitende Heizluft sein. Das Wärmeträgermedium kann im Bereich der Wärmeübertragungsanordnung einen Teil der darin transportierten Wärme abgeben bzw. übertragen auf das in zumindest einen Wärmerohr vorhandene zweite Wärmeträgermedium, und zwar im Wärmeeinkopplungsbereich dieses wenigstens einen Wärmeübertragungsrohrs. Durch die Wärmeaufnahme verdampft das zweite Wärmeträgermedium im Wärmeeinkopplungsbereich. Durch die im Wärmerohr vorhandenen bzw. sich aufbauenden Druckverhältnisse strömt das gasförmige erste Wärmeträgermedium im ersten Strömungsraumbereich in Richtung zum Wärmeauskopplungsbereich. Da dieser zumindest dann, wenn das im Wasserreservoir enthaltene Wasser eine vergleichsweise niedrige Temperatur aufweist, auch eine niedrigere Temperatur haben wird, als der Wärmeeinkopplungsbereich, kondensiert das zweite Wärmeträgermedium im Wärmeauskopplungsbereich. Die bei der Kondensation frei werdende Wärme wird im Wärmeauskopplungsbereich nach außen hin zu dem diesen Wärmeauskopplungsbereich umgebenden Wasser übertragen, so dass eine Erwärmung des Wassers erfolgt.

Durch den Einsatz zumindest eines derartigen Wärmerohrs zur Übertragung von Wärme vom ersten Wärmeträgermedium auf das zu erwärmende Wasser wird eine sehr effiziente Erwärmung des Wassers ermöglicht, da ein derartiges Wärmerohr eine sehr hohe Wärmetransportkapazität aufweist, da es den physikalischen Effekt des Freiwerdens von Energie bei der Kondensation, also beim Phasenübergang von einem gasförmigen zu einem flüssigen Zustand, nutzt.

Um eine effiziente Umströmung des Wärmeeinkopplungsbereichs durch erstes Wärmeträgermedium zu gewährleisten, wird vorgeschlagen, dass eine Förderanordnung zum Fördern von erstem Wärmeträgermedium von der Wärmetauscheranordnung durch einen Wärmeträgermediumkanal zur Wärmeübertragungsanordnung vorgesehen ist.

Wenn dabei die Förderanordnung ein Heizluftgebläse umfasst, kann mit ein und demselben Heizgerät bzw. ein und derselben Förderanordnung das erste Wärmeträgermedium sowohl zur Erwärmung des Innenraums, beispielsweise eines Wohnmobils, als auch des im Reservoir enthaltenen Wassers genutzt werden.

Um eine definierte Umströmung des Wärmeeinkopplungsbereichs des wenigstens einen Wärmerohrs weiter zu unterstützen, wird vorgeschlagen, dass wenigstens ein Wärmerohr wenigstens in seinem Wärmeeinkopplungsbereich sich im Wesentlichen orthogonal zu einer Strömungsrichtung des ersten Wärmeträgermediums im Bereich der Wärmeübertragungsanordnung erstreckt. Alternativ oder zusätzlich kann vorgesehen sein, dass wenigstens ein Wärmerohr wenigstens in seinem Wärmeeinkopplungsbereich sich im Wesentlichen parallel zu einer Strömungsrichtung des ersten Wärmeträgermediums im Bereich der Wärmeübertragungsanordnung erstreckt.

Um eine in baulicher Hinsicht einfach zu realisierende Ausgestaltung der Wärmeübertragungsanordnung zu erhalten, wird vorgeschlagen, dass wenigstens ein Wärmerohr sich über seine gesamte Länge im Wesentlichen geradlinig erstreckt.

Alternativ kann vorgesehen sein, dass wenigstens ein Wärmerohr in einem Übergangsbereich gekrümmt ist. Auf diese Art und Weise kann die Erstreckungsrichtung des wenigstens einen Wärmerohrs zur Aufnahme von Wärme von ersten Wärmeträgermedium einerseits und zur Übertragung von Wärme auf Wasser andererseits unabhängig voneinander gewählt werden. Weiter wird zur Erhöhung der auf das zu erwärmende Wasser übertragbaren Wärmemenge vorgeschlagen, dass eine Mehrzahl von sich wenigstens bereichsweise parallel zueinander erstreckenden Wärmerohren vorgesehen ist. Dabei kann vorgesehen sein, dass wenigstens ein Teil der Wärmerohre in ihrem Wärmeeinkopplungsbereich zueinander in der Strömungsrichtung des ersten Wärmeträgermediums im Bereich der Wärmeübertragungsanordnung oder/und quer dazu versetzt sind.

Bei einer besonders vorteilhaften Variante wird vorgeschlagen, dass in wenigstens einem Wärmerohr das zweite Wärmeträgermedium eine Kondesationstemperatur im Bereich von 60 °C aufweist. Auf diese Art und Weise kann erreicht werden, dass dann, wenn die Temperatur des Wassers sich 60 °C annähert, der thermodynamische Prozess in dem wenigstens einen Wärmerohr ineffizienter wird, also beim ersten Wärmeträgermedium selbst dann, wenn es eine Temperatur von deutlich über 60 °C hat, weniger Wärme entzogen wird.

Bei dem erfindungsgemäßen Wasserheizsystem kann vorzugsweise weiter vorgesehen sein, dass das Heizgerät brennstoffbetrieben ist und einen Brennerbereich zur Aufnahme von vorzugsweise flüssigem Brennstoff und Verbrennungsluft und zur Verbrennung eines Brennstoff/Verbrennungsluft-Gemisches aufweist. Dies gestattet es beispielsweise, das Wasserheizsystem mit demjenigen flüssigen Brennstoff zu speisen, welcher auch zum Betreiben des Wohnmobils eingesetzt wird, also beispielsweise Dieselbrennstoff,

Um im Betrieb des Wasserheizsystems von dessen Einbaulage bezüglich der Schwerkraftrichtung unabhängig zu sein, wird vorgeschlagen, dass der zweite Strömungsraumbereich wenigstens bereichsweise mit Kapillarstrukturmaterial ausgebildet ist. Das im Wärmeauskopplungsbereich kondensierende zweite Wärmeträgermedium kann somit im Kapillarstrukturmaterial aufgenommen werden und durch dessen Kapillarförderwirkung in Richtung zum Wärmeeinkopplungsbereich strömen, wo es durch den dort erfolgenden Wärmeeintrag verdampfen und mithin aus dem Kapillarstrukturmaterial austreten kann.

Die vorliegende Erfindung wird nachfolgend mit Bezug auf die beiliegenden Figuren detailliert beschreiben. Es zeigt:
- Fig. 1: eine prinzipartige Darstellung eines erfindungsgemäßen Wasserheizsystems;
- Fig. 2: eine Längsschnittansicht eines Wasserreservoirs in Verbindung mit einer Wärmeübertragungsanordnung;
- Fig. 3: eine teilweise geschnittene Querschnittdarstellung der in Fig. 2 gezeigten Baugruppe;
- Fig. 4: eine Schnittdarstellung der Baugruppe der Fig. 2, geschnitten längs einer Linie IV-IV in Fig. 2;
- Fig. 5: eine teilweise aufgeschnittene Darstellung eines Wärmerohrs;
- Fig. 6: eine der Fig. 2 entsprechende vereinfachte Prinzipdarstellung einer alternativen Ausgestaltungsart;
- Fig. 7: eine der Fig. 2 entsprechende vereinfachte Prinzipdarstellung einer alternativen Ausgestaltungsart; und
- Fig. 8: eine der Fig. 2 entsprechende vereinfachte Prinzipdarstellung einer alternativen Ausgestaltungsart.

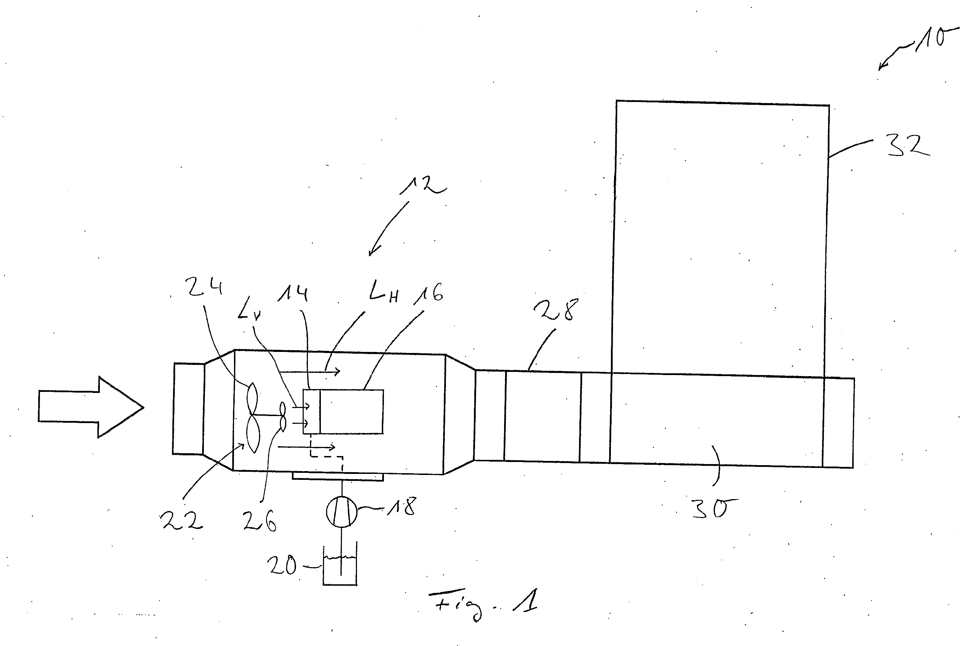

In Fig. 1 ist ein beispielsweise in einem Wohnmobil einsetzbares Wasserheizsystem allgemein mit 10 bezeichnet. Das Heizsystem 10 umfasst ein mit flüssigem Brennstoff zu betreibendes Heizgerät 12 mit einem Brennerbereich 14 und einer Wärmetauscheranordnung 16. Dem Brennerbereich 14 wird durch eine Brennstoffzuführanordnung, beispielsweise Dosierpumpe 18, flüssiger Brennstoff aus einem Brennstoffreservoir 20 zugeführt. Die im Brennerbereich 14 erzeugte Wärme wird im Bereich der Wärmetauscheranordnung 16 auf die als erstes Wärmeträgermedium eingesetzte Heizluft L_{H} übertragen. Diese wird gefördert durch ein allgemein mit 22 bezeichnetes Gebläse, welches einen ersten Förderbereich 24 im Wesentlichen zum Fördern der Heizluft und einen zweiten Förderbereich 26 zum Fördern von in den Brennerbereich 14 einzuleitender Verbrennungsluft Lᵥ umfasst.

Es sei hier darauf hingewiesen, dass selbstverständlich für die Heizluft und die Verbrennungsluft auch separate, voneinander unabhängig betreibbare Gebläse vorgesehen sein können.

Die im Bereich der Wärmetauscheranordnung 16 im Verbrennungsbetrieb des Heizgeräts 12 erwärmte Heizluft L_{H} strömt durch einen Heizluftkanal 28 in Richtung zu einer allgemein mit 30 bezeichneten Wärmeübertragungsanordnung. Im Bereich dieser Wärmeübertragungsanordnung gibt die Heizluft L_{H} einen Teil der darin transportierten Wärme ab. Diese wird in nachfolgend beschriebener Art und Weise auf das in einem Wasserreservoir 32 enthaltene Wasser übertragen. Die Heizluft L_{H} strömt dann mit verminderter Temperatur weiter und kann, sofern erforderlich bzw. gewünscht, in den Fahrzeuginnenraum beispielsweise eines Wohnmobils eingeleitet werden, um diesen zu erwärmen, oder, sofern nicht erforderlich oder gewünscht, nach außen hin abgegeben werden.

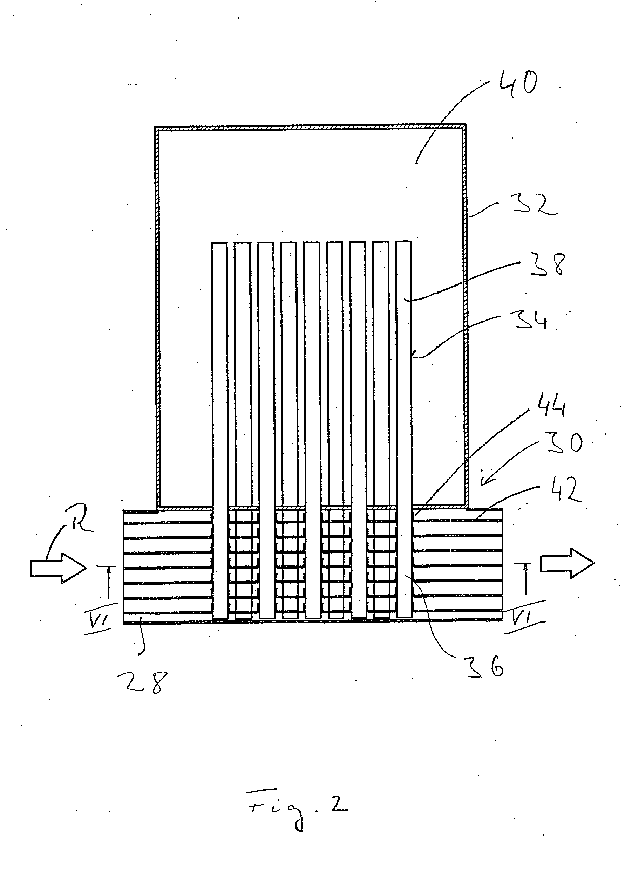

Die in den Fig. 2 bis 4 detaillierter dargestellte Wärmeübertragungsanordnung 30 umfasst eine Mehrzahl von sich im Wesentlichen parallel zueinander geradlinig erstreckenden Wärmerohren 34. Diese liegen mit einem jeweiligen Wärmeeinkopplungsbereich 36 im Heizluftkanal 28 und liegen mit einem jeweiligen Wärmeauskopplungsbereich 38 in dem im Allgemeinen mit Wasser befüllten Innenraum 40 des Wasserreservoirs 32.

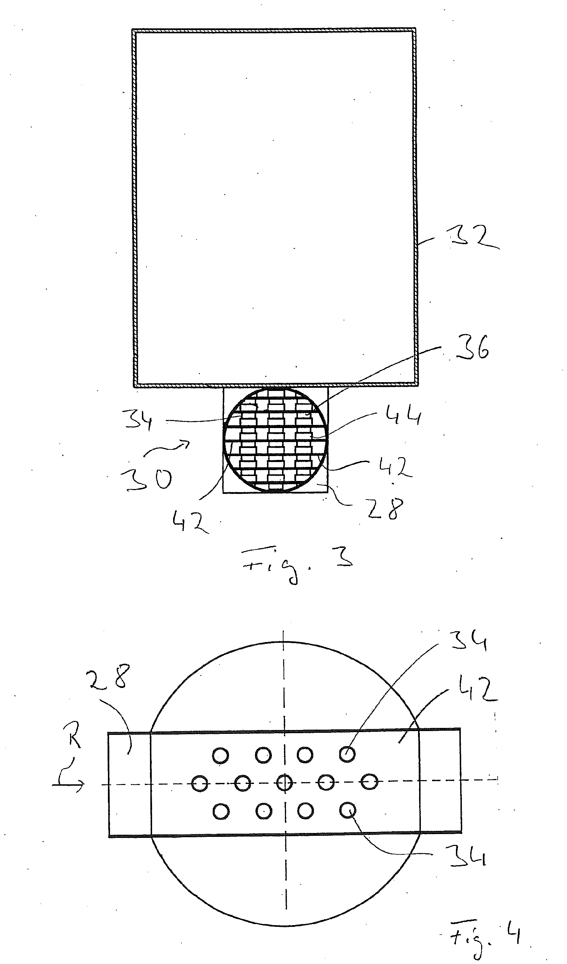

Um im Heizluftkanal 28 die zur Wärmeübertragung auf die Wärmerohre 34 zur Verfügung stehende Gesamtoberfläche zu vergrößern, können diese in ihrem sich im Wesentlichen orthogonal zur Strömungsrichtung R der Heizluft L_{H} im Bereich der Wärmeübertragungsanordnung 30 erstreckenden Wärmeeinkopplungsbereichen 36 mit im Wesentlichen eben ausgebildeten und in der Strömungsrichtung R langgestreckten, flächigen Wärmeübertragungselementen 42 gekoppelt sein. Diese können beispielsweise entsprechend dem kreisförmigen Außenumfang der Wärmerohre 34 zylindrische Verbindungsansätze 44 umfassen, in welche die Wärmeeinkopplungsbereiche 36 eingeführt und beispielsweise materialschlüssig oder durch Presspassung fest eingesetzt sind. Wie die Fig. 2 und 3 dies deutlich zeigen, können mehrere derartige Wärmeübertragungselemente 42 in der Längserstreckungsrichtung der Wärmerohre 34 in ihren jeweiligen Wärmeeinkopplungsbereichen 36 übereinander angeordnet sein.

Wie die Fig. 4 zeigt, können die Wärmerohre 34 bezüglich einander in der Strömungsrichtung R und quer dazu versetzt liegen. Beispielsweise können mehrere im Wesentlichen in der Strömungsrichtung R sich erstreckende Reihen von Wärmerohren 34 vorgesehen sein, wobei die Wärmerohre 34 wenigstens zweier unmittelbar benachbarter Reihen in der Strömungsrichtung R zueinander versetzt liegen, so dass beispielsweise in der Strömungsrichtung R jeweils zwischen zwei Wärmerohren 34 einer Reihe näherungsweise mittig ein Wärmerohr 34 einer unmittelbar benachbarten Reihe liegt.

Die Wärmerohre 34 nehmen in ihrem jeweiligen Wärmeeinkopplungsbereich 36 Wärme von der Heizluft L_{H} auf und transferieren diese in Richtung zu den jeweiligen Wärmeauskopplungsbereichen 38. Dort wird die Wärme wieder freigesetzt und auf das im Innenraum 40 enthaltene Wasser übertragen.

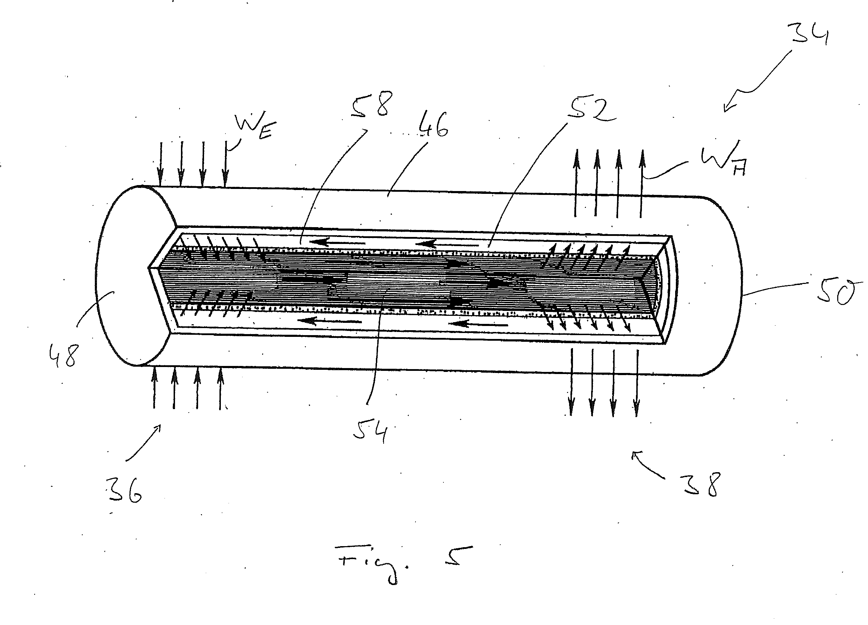

Der thermodynamische Mechanismus, mit welchem diese Wärmeübertragung in den Wärmerohren 34 erfolgt, wird nachfolgend mit Bezug auf die Fig. 5 erläutert.

In Fig. 5 ist ein Wärmerohr 34 so dargestellt, dass sein Wärmeeinkopplungsbereich 36 links liegt und sein Wärmeauskopplungsbereich 38 rechts liegt. Das Wärmerohr 34 ist mit einer im Wesentlichen zylindrischen, vergleichsweise dünnen, beispielsweise aus Metallmaterial aufgebauten Außenumfangswandung 46 aufgebaut. In ihrer Längsrichtung sind die Wärmerohre 34 durch jeweilige Bodenwandungen 48, 50 abgeschlossen, so dass sich ein im Wesentlichen vollständig abgekapseltes Innenvolumen ergibt. In diesem Innenvolumen ist ein zweites Wärmeträgermedium enthalten, welches hinsichtlich seiner thermodynamischen Eigenschaften so ausgelegt ist, dass es unter Berücksichtigung der im Innenvolumen des Wärmeübertragungsbereichs vorherrschenden Druckverhältnisse bei den im vorliegenden Anwendungsfalle relevanten Temperaturen einen Phasenübergang zwischen einem gasförmigen Aggregatzustand und einem flüssigen Aggregatzustand aufweist. Beispielsweise kann die Auslegung derart sein, dass bei einem Innendruck von etwa 10⁻⁵ bar die Kondensationstemperatur des zweiten Wärmeträgermediums bei etwa 60 °C liegt. Hierzu kann beispielsweise NH₃ als zweites Wärmeträgermedium eingesetzt werden, wobei zur Einstellung der Kondensationstemperatur der Unterdruck im Wärmerohr 34 entsprechend angepasst werden kann.

Im Inneren des Wärmerohrs 34 ist beispielsweise an der Außenumfangswandung 46 innen anliegend ein zylindrisches Kapillarstrukturelement 52 vorgesehen, welches mit seiner zylindrischen Struktur sich vom Wärmeeinkopplungsbereich 36 bis zum Wärmeauskopplungsbereich 38 erstreckt. Das Kapillarstrukturelement 52 ist innen hohl und umgibt somit einen ersten Strömungsraumbereich 54, in welchem gasförmiges zweites Wärmeträgermedium vom Wärmeeinkopplungsbereich 36 zum Wärmeauskopplungsbereich 38 strömen kann. Das gasförmige zweite Wärmeträgermedium entsteht im Wärmeeinkopplungsbereich 36 dann, wenn dieser von erwärmter Heizluft L_{H} umströmt wird und dabei ein Wärmestrom W_{E} auf das im Kapillarstrukturelement 52 in flüssigem Aggregatzustand dort enthaltene zweite Wärmeträgermedium übertragen wird. Das zweite Wärmeträgermedium wird über seine Kondensations- bzw. Verdampfungstemperatur erwärmt und tritt in gasförmigem Aggregatzustand aus dem Kapillarstrukturelement 52 nach innen aus und somit in den ersten Strömungsraumbereich 54 ein. Aufgrund der Tatsache, dass im Wärmeeinkopplungsbereich 36 gasförmiges zweites Wärmeträgermedium entsteht, ist dort ein Überdruck vorhanden, so dass gefördert durch die zum Wärmeauskopplungsbereich 38 entstehende Druckdifferenz das gasförmige zweite Wärmeträgermedium vom Wärmeeinkopplungsbereich 36 zum Wärmeauskopplungsbereich 38 strömt.

Im Wärmeauskopplungsbereich 38 ist das Wärmerohr 34 in Kontakt mit dem noch kälteren Wasser, das eine Temperatur unter der Kondensationstemperatur des zweiten Wärmeträgermediums hat. Somit wird auch das Wärmerohr 34 in diesem Bereich eine entsprechend niedrige Temperatur aufweisen, was dazu führt, dass im Wärmeauskopplungsbereich 38 das gasförmige zweite Wärmeträgermedium kondensiert und aufgrund der Kapillarstruktur bzw. Kapillarförderwirkung des Kapillarstrukturelements 52 in dieses eintritt. Die bei der Kondensation frei werdende Kondensationswärme wird als Wärmestrom W_{A} in das Wasser übertragen.

Aufgrund des Defizits an flüssigem zweitem Wärmeübertragungsmedium im Bereich des Wärmeeinkopplungsbereichs 36 entsteht ein Kapillarförderdruck, durch welchen das flüssige zweite Wärmeträgermedium im Innenvolumenbereich des Kapillarstrukturelements 52, welcher im Wesentlichen einen zweiten Strömungsraumbereich 58 bereitstellt, vom Wärmeauskopplungsbereich 38 zum Wärmeeinkopplungsbereich 36 zurückströmt.

Es ist somit ein thermodynamischer Kreislauf aufgebaut, welcher darauf beruht, dass zwischen dem Wärmeeinkopplungsbereich 36 und dem Wärmeauskopplungsbereich 38 eine Temperaturdifferenz vorhanden ist, und zwar derart, dass die Temperatur im Wärmeeinkopplungsbereich 36 bei bzw. über der Verdampfungstemperatur des zweiten Wärmeträgermediums liegt und die Temperatur im Wärmeauskopplungsbereich 38 bei bzw. unter der Kondensationstemperatur des zweiten Wärmeträgermediums liegt.

Bei dem vorangehend beschriebenen thermodynamischen Kreislauf in jedem der Wärmerohre 34 wird eine außerordentlich effiziente Wärmeübertragung von der Heizluft Lₕ auf das im Wasserreservoir 32 enthaltene Wasser erreicht. Durch das selbsttätige Beenden dieser thermodynamischen Funktionalität bei Erreichen der vorangehend angegebenen Grenztemperatur ist es nicht erforderlich, irgendwelche schaltungstechnischen Maßnahmen bereitzuhalten oder die Temperatur des Wassers hinsichtlich des Abschaltens des Heizgeräts 12 zu überwachen.

Es sei in diesem Zusammenhang darauf hingewiesen, dass selbstverständlich die Wärmerohre 34 in anderer Konfiguration ausgebildet sein könnten. So könnte selbstverständlich das Kapillarstrukturelement 52 auch mit anderer räumlicher Konfiguration im Innenvolumen eines Wärmerohrs 34 angeordnet sein. Auch könnten die Wärmerohre 34 ohne Kapillarstrukturelement 52 nach dem so genannten Thermosiphon-Prinzip arbeiten, bei welchem die Förderung zwischen dem Wärmeeinkopplungsbereich 36 und dem Wärmeauskopplungsbereich 38 durch Schwerkraftwirkung erfolgt. Dies erfordert jedoch eine entsprechend definierte Orientierung der Wärmerohre 34 bezüglich der Schwerkraftrichtung.

Von Bedeutung ist jedoch, dass unabhängig davon, nach welchem Aufbau- bzw. Funktionsprinzip die Wärmerohre 34 arbeiten, der Wärmeeinkopplungsbereich 36 sich immer dort ergeben bzw. einstellen wird, wo das Wärmerohr 34 in Kontakt mit einer Wärmequelle, hier als der Heizluft L_{H}, ist. Gleichermaßen wird der Wärmeauskopplungsbereich 38 sich immer dort einstellen bzw. ergeben, wo das Wärmerohr 34 in Konakt mit einer Wärmesenke, hier also dem zu erwärmenden Wasser, ist. Dies bedeutet, dass jedes Wärmerohr 34 mit seinem gesamten im Heizluftkanal 28 liegenden Erstreckungsbereich als Wärmeeinkopplungsbereich 36 wirksamt ist und seinem gesamten im Wasser bzw. im Wasserreservoir 32 liegenden Erstreckungsbereich als Wärmeauskopplungsbereich und somit zur Erwärmung des darin enthaltenen Wasser wirksam ist, ohne dass hierfür spezielle bauliche Maßnahmen erforderlich wären.

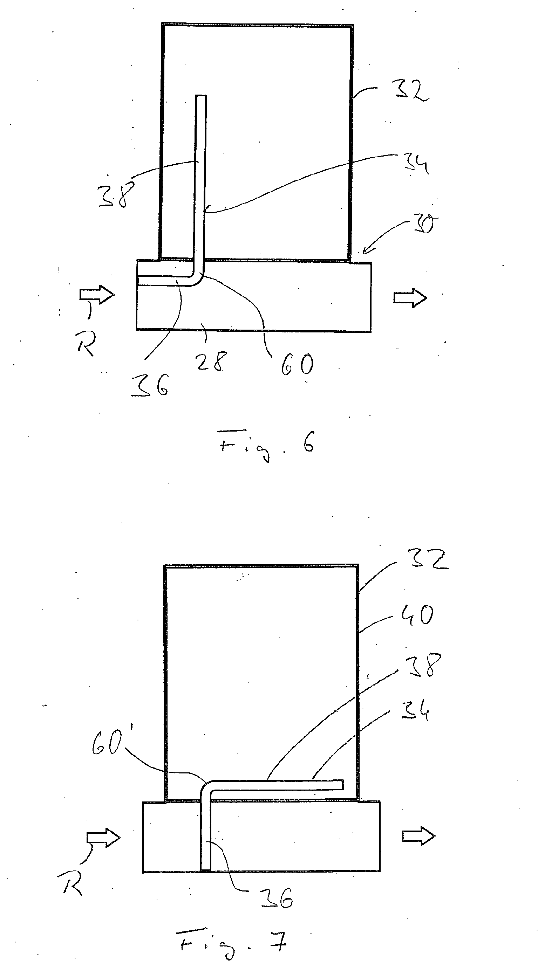

Die Fig. 6 bis 8 zeigen verschiedene Variationen hinsichtlich der Ausgestaltung bzw. der Erstreckungsrichtung der Wärmeübertragungsrohre.

So zeigt die Fig. 6 eine Anordnung, bei welcher das bzw. vorzugsweise alle Wärmeübertragungsrohre 34 mit ihrem Wärmeeinkopplungsbereich 36 sich im Wesentlichen parallel zur Strömungsrichtung R der Heizluft L_{H} im Bereich der Wärmeübertragungsanordnung 30 liegt. In einem Übergangsbereich 60, in welchem das Wärmerohr 34 beispielsweise in einem Winkel von 90° abgekrümmt ist, geht das Wärmerohr 34, im Ausgestaltungsbeispiel der Fig. 6 noch innerhalb des Heizluftkanals 28, also im Wärmeeinkopplungsbereich 36, in eine bezüglich der Strömungsrichtung R im Wesentlichen orthogonale Erstreckungsrichtung über und erstreckt sich gleichermaßen orthogonal zur Strömungsrichtung R im Wasserreservoir 32 vom Heizluftkanal 28 weg.

Bei der in Fig. 7 dargestellten Ausgestaltungsform liegt der Wärmeeinkopplungsbreich 36 des bzw. vorzugsweise jedes Wärmerohrs 34 wieder näherungsweise orthogonal zur Strömungsrichtung R. Der Übergangsbereich 60' liegt hier im Innenraum 40 des Wasserreservoirs 32, also im Wärmeauskopplungsbereich 38. Mit dem wesentlichen Erstreckungsbereich des Wärmeauskopplungsbereichs 38 verläuft das Wärmerohr 34 dann im Wesentlichen parallel zur Strömungsrichtung R.

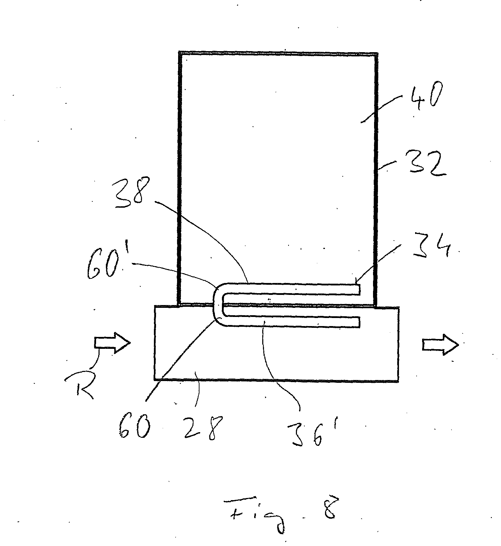

Bei der in Fig. 8 dargestellten Variante sind zwei Übergangsbereiche 60, 60' vorhanden. Der Übergangsbereich 60' liegt im Heizluftströmungskanal 28, also noch im Wärmeeinkopplungsbereich 36 des dargestellten Wärmerohrs 34, während der Übergangsbereich 60' im Innenraum 40 des Wasserreservoirs 32, mithin also im Wärmeauskopplungsbereich 38 des Wärmeübertragungsrohrs 34 liegt. Die wesentlichen Längenabschnitte des Wärmeeinkopplungsbereichs 36 und des Wärmeauskopplungsbereichs 38 erstrecken sich hier zueinander im Wesentlichen parallel und auch parallel zur Strömungsrichtung R. Hier liegt also eine im Wesentlichen U-förmige Konfiguration der Wärmerohre 34 vor, während bei den Ausgestaltungsformen der Fig. 6 und 7 eine im Wesentlichen L-förmige Konfiguration vorliegt. In jedem Falle ist jedoch die in einem jeweiligen Übergangsbereich 60 bzw. 60' gebildete Abwinkelung nahe dem Angrenzungsbereich des Wärmeeinkopplungsbereichs 36 an den Wärmeauskopplungsbereich 38. Es ist selbstverständlich, dass auch weiter von dem Angrenzungsbereich entfernt weitere Krümmungs- bzw. Übergangsbereiche vorgesehen sein können, in welchen das Wärmeübertragungsrohr abgekrümmt sein kann.

Um ein möglichst gleichmäßiges Erwärmungsverhalten über das gesamte Volumen des Wasserreservoirs 32 zu erhalten, ist es selbstverständlich möglich, verschiedene Erstreckungsrichtungen insbesondere der Wärmeauskopplungsbereiche 38 verschiedener Wärmerohre 34 zu kombinieren. Da schwerkraftbedingt das wärmere Wasser sich im oberen Bereich, also beispielsweise dem vom Heizluftkanal 28 weiter entfernt liegendem Bereich des Wasserreservoirs 32 ansammeln wird, kann jedoch dafür gesorgt werden, dass im unteren, also beispielsweise dem Heizluftkanal 28 näher liegenden Volumenbereich des Wasserreservoirs 32, eine größere Gesamtoberfläche der Wärmeauskopplungsbereiche 38 verschiedener Wärmerohre 34 vorgesehen ist.

## Patentansprüche

1. Wasserheizsystem, insbesondere für Wohnmobile, umfassend:
- ein Heizgerät (12) mit einer Wärmetauscheranordnung (16) zur Übertragung von im Heizgerät (12) bereitgestellter Wärme auf ein erstes Wärmeträgermedium,
- ein Wasserreservoir (32) zur Aufnahme von zu erwärmendem Wasser,
- eine Wärmeübertragungsanordnung (30) zur Übertragung von im ersten Wärmeträgermedium transportierter Wärme auf Wasser im Wasserresservoir (32),
wobei die Wärmeübertragungsanordnung (30) wenigstens ein Wärmerohr (34) mit einem in thermischer Wechselwirkung mit dem ersten Wärmeträgermedium stehenden oder bringabren Wärmeeinkopplungsbereich (36) und einem in thermischer Wechselwirkung mit dem Wasser stehenden Wärmeauskopplungsbereich (38) umfasst, wobei in dem wenigstens einen Wärmerohr (34) ein zweites Wärmeträgermedium enthalten ist und ein erster Strömungsraumbereich (54) zur Durchströmung im Wesentlichen durch vom Wärmeeinkopplungsbereich (36) zum Wärmeauskopplungsbereich (38) strömendem, gasförmigem zweiten Wärmeträgermedium sowie ein zweiter Strömungsraumbereich zur Durchströmung im Wesentlichen durch vom Wärmeauskopplungsbereich (38) zum Wärmeeinkopplungsbereich (36) strömendem, flüssigem zweiten Wärmeträgermedium gebildet sind.

2. Wasserheizsystem nach Anspruch 1,
**dadurch gekennzeichnet, dass** eine Förderanordnung (22) zum Fördern von erstem Wärmeträgermedium von der Wärmetauscheranordnung (16) durch einen Wärmeträgermediumkanal (28) zur Wärmeübertragungsanordnung (30) vorgesehen ist.

3. Wasserheizsystem nach Anspruch 2,
**dadurch gekennzeichnet, dass** die Förderanordnung (22) ein Heizluftgebläse (24) umfasst.

4. Wasserheizsystem nach einem der Ansprüche 1 bis 3,
**dadurch gekennzeichnet, dass** wenigstens ein Wärmerohr (34) wenigstens in seinem Wärmeeinkopplungsbereich (36) sich im Wesentlichen orthogonal zu einer Strömungsrichtung (R) des ersten Wärmeträgermediums im Bereich der Wärmeübertragungsanordnung (30) erstreckt.

5. Wasserheizsystem nach einem der Ansprüche 1 bis 4,
**dadurch gekennzeichnet, dass** wenigstens ein Wärmerohr (34) wenigstens in seinem Wärmeeinkopplungsbereich (36) sich im Wesentlichen parallel zu einer Strömungsrichtung (R) des ersten Wärmeträgermediums im Bereich der Wärmeübertragungsanordnung (30) erstreckt.

6. Wasserheizsystem nach einem der Ansprüche 1 bis 5,
**dadurch gekennzeichnet, dass** wenigstens ein Wärmerohr (34) sich über seine gesamte Länge im Wesentlichen geradlinig erstreckt.

7. Wasserheizsystem nach einem der Ansprüche 1 bis 6,
**dadurch gekennzeichnet, dass** wenigstens ein Wärmerohr (34) in wenigstens einem Übergangsbereich (60, 60') gekrümmt ist.

8. Wasserheizsystem nach einem der Ansprüche 1 bis 7,
**dadurch gekennzeichnet, dass** eine Mehrzahl von sich wenigstens bereichsweise parallel zueinander erstreckenden Wärmerohren (34) vorgesehen ist.

9. Wasserheizsystem nach Anspruch 8,
**dadurch gekennzeichnet, dass** wenigstens ein Teil der Wärmerohre (34) in ihrem Wärmeeinkopplungsbereich (36) zueinander in der Strömungsrichtung des ersten Wärmeträgermediums im Bereich der Wärmeübertragungsanordnung (30) oder/und quer dazu versetzt sind.

10. Wasserheizsystem nach einem der Ansprüche 1 bis 9,
**dadurch gekennzeichnet, dass** in wenigstens einem Wärmerohr (34) das zweite Wärmeträgermedium eine Kondesationstemperatur im Bereich von 60 °C aufweist.

11. Wasserheizsystem nach einem der Ansprüche 1 bis 10,
**dadurch gekennzeichnet, dass** das Heizgerät (12) brennstoffbetrieben ist und einen Brennerbereich (14) zur Aufnahme von vorzugsweise flüssigem Brennstoff und Verbrennungsluft und zur Verbrennung eines Brennstoff/Verbrennungsluft-Gemisches aufweist.

12. Wasserheizsystem nach einem der Ansprüche 1 bis 11,
**dadurch gekennzeichnet, dass** der zweite Strömungsraumbereich (58) wenigstens bereichsweise mit Kapillarstrukturmaterial (52) ausgebildet ist.
